# EUROPEAN PATENT SPECIFICATION

(11) **EP 0 899 437 B1**
(45) Date of publication and mention of the grant of the patent: **04.06.2003**
(21) Application number: 98115367.9
(22) Date of filing: 14.08.1998
(51) Int. Cl.: F02B 39/16, F02B 37/24, F02B 37/18

(54) **Abnormality determining method for variable capacity type turbocharger**
Fehlererkennungsverfahren eines Abgasturboladers mit variabler Kapazität
Procédé de détermination d'anomalie d'un turbocompresseur de suralimentation avec capacité variable

(30) Priority: 28.08.1997 JP 23274597
(43) Date of publication of application: 03.03.1999
(73) Proprietor: TOYOTA JIDOSHA KABUSHIKI KAISHA, Aichi-ken (JP)
(72) Inventor: Nagae, Masahiro, Toyota-shi, Aichi-ken 471-8571 (JP)
(74) Representative: Pellmann, Hans-Bernd, Dipl.-Ing.

(56) References cited:
- EP-A- 0 769 612
- GB-A- 2 252 849
- PATENT ABSTRACTS OF JAPAN vol. 099, no. 002, 26 February 1999 (1999-02-26) & JP 10 311223 A (TOYOTA MOTOR CORP), 24 November 1998 (1998-11-24)
- PATENT ABSTRACTS OF JAPAN vol. 098, no. 006, 30 April 1998 (1998-04-30) & JP 10 047071 A (TOYOTA MOTOR CORP), 17 February 1998 (1998-02-17)
- PATENT ABSTRACTS OF JAPAN vol. 011, no. 014 (M-553), 14 January 1987 (1987-01-14) & JP 61 190124 A (MAZDA MOTOR CORP), 23 August 1986 (1986-08-23)
- PATENT ABSTRACTS OF JAPAN vol. 010, no. 021 (M-449), 28 January 1986 (1986-01-28) & JP 60 178932 A (NISSAN JIDOSHA KK), 12 September 1985 (1985-09-12)

## Description

The present invention relates to an abnormality determining method and system for a variable capacity type turbo charger according to the preambles of claims 1 and 8, respectively that can always properly determine whether there is an abnormality in the variable capacity mechanism, without requiring provision of a dedicated detection device.

For improvements in the output of an internal combustion engine, it is normally desirable to increase the amount of air supplied into the combustion chambers. To increase the air charging efficiency, supercharging systems have been practically used, which forcibly supply air from outside into the combustion chambers in addition to air normally drawn into the combustion chambers by negative pressure that occurs in the combustion chambers during piston movements. Among such supercharging systems, turbochargers are widely known.

A turbocharger has a turbine wheel that is rotated by exhaust gas discharged from the combustion chambers and a compressor wheel that forcibly sends air into the combustion chambers. The turbine wheel and the compressor wheel are interconnected by a rotor shaft so that they can rotate together. When the turbine wheel is rotated by exhaust gas blown thereto, the rotation is transmitted to the compressor wheel by the rotor shaft. The compressor wheel is thus rotated so as to forcibly send air into the combustion chambers.

In the turbocharger, it is desirable to appropriately adjust the pressure of air supplied into the combustion chambers, that is, the supercharged pressure, in accordance with the operating conditions of the internal combustion engine. For this purpose, a variable capacity type turbocharger that variably controls the supercharged pressure by adjusting, for example, the flow rate and velocity of exhaust gas blown to the turbine wheel, has been proposed and put into practical use.

A variable capacity type turbocharger variably controls the flow velocity of exhaust gas by varying the area of a passage of exhaust gas to be blown to the turbine wheel. In such a turbocharger, a variable nozzle (variable capacity mechanism) is provided, for example, at the intake opening of the turbine, so as to variably control the area of the intake opening. In a low-speed or low-load engine operating condition where the amount of exhaust gas is small so that the supercharging effect based on gas volume is not remarkable, the nozzle opening is reduced in size to reduce the area of the intake opening of the turbine, thereby increasing the flow velocity of exhaust gas blown to the turbine wheel. The increased exhaust gas flow velocity enhances the supercharging effect based on dynamic gas pressure. In a high-speed or high-load engine operating condition where the amount of exhaust gas is large so that sufficient supercharging effect based on gas volume is expected, the nozzle opening is expanded to increase the area of the intake opening of the turbine and therefore reduce the exhaust gas flow resistance. The reduced exhaust gas flow resistance increases the gas discharging efficiency of the internal combustion engine. In this manner, a high supercharging effect in accordance with the operating conditions of the internal combustion engine can be maintained.

In the variable capacity type turbocharger as described above, if the variable capacity mechanism fails due to, for example, the sticking (or fixation) of the variable nozzle, it becomes impossible to adjust the supercharged pressure in accordance with the operating conditions of the internal combustion engine. For example, if, due to a failure, the nozzle opening becomes fixed to a great opening, a high supercharging effect cannot be expected in a low-speed or low-load engine operating condition since it is now impossible to increase the flow velocity of exhaust gas blown to the turbine wheel. If the nozzle opening becomes fixed to a small opening, the gas discharging efficiency in a high-speed or high-load engine operating condition decreases due to an increased exhaust gas flow resistance. Therefore, the engine's output will likely decrease.

In order to avoid such an undesired event, it is necessary to monitor whether the variable nozzle, that is, the variable capacity mechanism, is operating normally. An effective method for determining an abnormality in the variable capacity mechanism is to directly monitor the operation of the nozzle. However, this effective method requires provision of a dedicated detection device, thereby complicating the construction of the internal combustion engine and increasing the production cost.

JP-A-61-190124, for example, discloses a method wherein an abnormality in the variable capacity mechanism is determined on the basis of the supercharged pressure. However, if the nozzle has a closed-valve abnormality, the exhaust gas pressure increases so that the turbo effect decreases, that is, the supercharged pressure does not increases to a certain amount which is greater than a predetermined value. Under such a condition, it becomes impossible to properly determine an abnormality in the variable capacity mechanism.

EP-A-0 769 612 relates to a turbocharger without the possibility of controlling its capacity. Moreover, the detection of turbocharger-nonspecific characteristic values and their comparison with predetermined reference values is only made to detect abnormalities of the turbocharger system itself but not abnormalities of a variable capacity mechanism of the turbo charger. The purpose of this references is basically to detect abnormalities concerning the intake pressure including the intake gas pressure sensor. Abnormalities concerning the intake gas pressure of conventional type turbocharger can be detected by making use of the intake gas pressure.

It is an object of the present invention to further develop an abnormality determining method for a variable capacity type turbocharger or an abnormality determining system for a variable capacity type turbocharger according to the preamble of claims 1 and 8 such that abnormalities can always be properly determined while the need for a special detection device is eliminated.

This object is achieved by an abnormality determining method for a variable capacity type turbocharger according to claim 1 and by an abnormality determining system for a variable capacity type turbocharger according to the features of claim 8.

A generic abnormality determining method for a variable capacity type turbocharger and a generic abnormality determining system for a variable capacity type turbocharger is known from JP-A-60178932. According thereto, the variable capacity type turbocharger operates on the basis of an exhaust gas flow from an internal combustion engine so as to supercharge a combustion chamber of the internal combustion engine with intake air. A variable mechanism variably controls an amount of the exhaust gas introduced into the variable capacity type turbocharger so that the amount of operation of the variable capacity type turbocharger is controlled. An abnormality of the variable capacity mechanism can be detected. When the abnormality of the variable capacity mechanism is detected, the opening amount of a bypass control valve provided in a bypass passage for bypassing the exhaust gas turbine of the variable capacity type turbocharger is increased stepwise in order to reduce an exhaust gas pressure. The abnormality is detected when the detected actual opening amount is near the minimum opening amount although an instructed opening amount of the variable capacity mechanism is large. Thus, this reference discloses a fail-safe system based on the detection of an opening amount of the variable capacity mechanism.

According to the present invention, the need for a special detection device is eliminated.

The dependent claims describe further advantageous embodiments of the invention.

If an abnormality occurs in the variable capacity mechanism, the value indicating an engine control state in the internal combustion engine correspondingly exhibits a value that is different from a normal value. The value indicating an engine control state that occurs when there is no abnormality in the variable capacity mechanism is obtained beforehand or pre-stored. The pre-stored value indicating an engine control state is compared with a present value indicating an engine control state detected as a turbocharger-unspecific characteristic value under a predetermined operating condition. If the difference therebetween is equal to or greater than the predetermined value, it is determined that an abnormality has occurred in the variable capacity mechanism.

According to an advantageous further development of the invention, the value indicating an engine control state for comparison is an output control characteristic value including at least one of an amount of fuel injected, a fuel injection timing and an ignition timing.

A control of adjusting the output control characteristic value is performed in order to establish a predetermined operating condition of the internal combustion engine. If an abnormality occurs in the variable capacity mechanism, the output of the internal combustion engine correspondingly changes. Corresponding to the output change, the output control characteristic value is adjusted. The relationship between the amount of operation of the variable capacity mechanism and the output control characteristic value under a predetermined engine operating condition is obtained beforehand. When the engine is in a predetermined operating condition, the present output control characteristic value is compared with a value that the output control characteristic value should assume. If the difference therebetween is equal to or greater than a predetermined value, it is determined that an abnormality has occurred in the variable capacity mechanism.

According to another further development of the invention, the value indicating an engine control state for comparison is a revolution speed of the internal combustion engine.

If an abnormality occurs in the variable capacity mechanism, the output of the internal combustion engine correspondingly changes and, therefore, the revolution speed of the internal combustion engine changes. The relationship between the amount of operation of the variable capacity mechanism and the revolution speed of the internal combustion engine under a predetermined operating condition is obtained beforehand. When the engine is in a predetermined operating condition, the present revolution speed is compared with a value that the revolution speed should assume. If the difference therebetween is equal to or greater than a predetermined value, it is determined that an abnormality has occurred in the variable capacity mechanism.

According to an advantageous further development of the invention, the predetermined operating condition of the internal combustion engine related to the comparison of the value indicating an engine control state is an idling condition, and the value indicating an engine control state for comparison is an amount of fuel injected into the internal combustion engine.

During engine idling, the present fuel injection amount is compared with a pre-stored fuel injection amount, which is an amount occurring when the variable capacity mechanism is in a normal condition. If the difference therebetween is equal to or greater than a predetermined value, it is determined that an abnormality has occurred in the variable capacity mechanism.

According to a further development of the invention, if the difference between the reference value indicating an engine control state and the actual value indicating an engine control state is equal to or greater than the predetermined value, an instruction to drive the variable capacity mechanism at a maximum degree is outputted. If a difference therebetween equal to or greater than the predetermined value still occurs, it is finally determined that there is an abnormality in the variable capacity mechanism.

If an abnormality is preliminarily determined in the variable capacity type turbocharger, the instruction to drive the variable capacity mechanism substantially to a maximum limit is outputted. If the abnormality continues despite the instruction, it is finally determined that there is an abnormality in the variable capacity mechanism.

According to another further development of the invention, a waste gate valve is provided in an exhaust system of the internal combustion engine for opening and closing a passage bypassing a turbine portion and the waste gate valve is opened, when an abnormality in the variable capacity mechanism is determined.

This method is able to determine whether there is an abnormality due to an operation failure of the variable capacity mechanism, without requiring provision of a special detection device. Furthermore, by fully opening the waste gate, exhaust gas is bypassed around the turbocharger when there is an abnormality in the turbocharger. Therefore, even after the abnormality has occurred, the method makes it possible for a vehicle to run stably.

According to a further development of the invention, if the difference between the reference value indicating an engine control state and the actual value indicating an engine control state is equal to or greater than the predetermined value, an instruction to drive the variable capacity mechanism at a maximum degree is outputted. If a difference therebetween equal to or greater than the predetermined value still occurs, the waste gate valve is opened.

In some cases, an abnormality is automatically removed by outputting the instruction to drive the variable capacity mechanism at the maximum degree. Therefore, this method can reduce the number of times of performing the abnormality determination.

The invention does not necessarily require all the features described above. That is, the invention may also 5 reside in a sub-combination of the described features.

The object as well as further features and advantages of the present invention will become apparent from the following description of a preferred embodiment with reference to the accompanying drawings, wherein like numerals are used to represent like elements and wherein:
Fig. 1 is a schematic illustration of a diesel engine system to which a preferred embodiment of the invention is applied;
Fig. 2 is a sectional view of a variable capacity type turbocharger shown in Fig. 1;
Figs. 3 A and 3B are sectional views of a variable nozzle mechanism of the turbocharger shown in Fig. 2;
Fig. 4 is a schematic illustration of a drive system of the variable nozzle mechanism shown in Figs. 3A and 3B;
Fig. 5 is a block diagram illustrating the electric construction of the engine system shown in Fig. 1;
Fig. 6 is a flowchart illustrating an engine control routine that is performed during engine idling;
Fig. 7 is a flowchart illustrating a turbocharger abnormality determining routine;
Fig. 8 is a graph indicating the relationship between the fuel injection amount QFIN and the nozzle vane opening;
Fig. 9 is a graph indicating the relationship between the nozzle duty ratio instruction value VNduty and the negative pressure in a negative pressure chamber;
Fig. 10 is a flowchart illustrating a fail mode routine; and
Fig. 11 is a flowchart illustrating a normal processing routine.

A preferred embodiment of the method for determining an abnormality in a variable capacity type turbocharger of the present invention will be described in detail hereinafter with reference to the accompanying drawings.

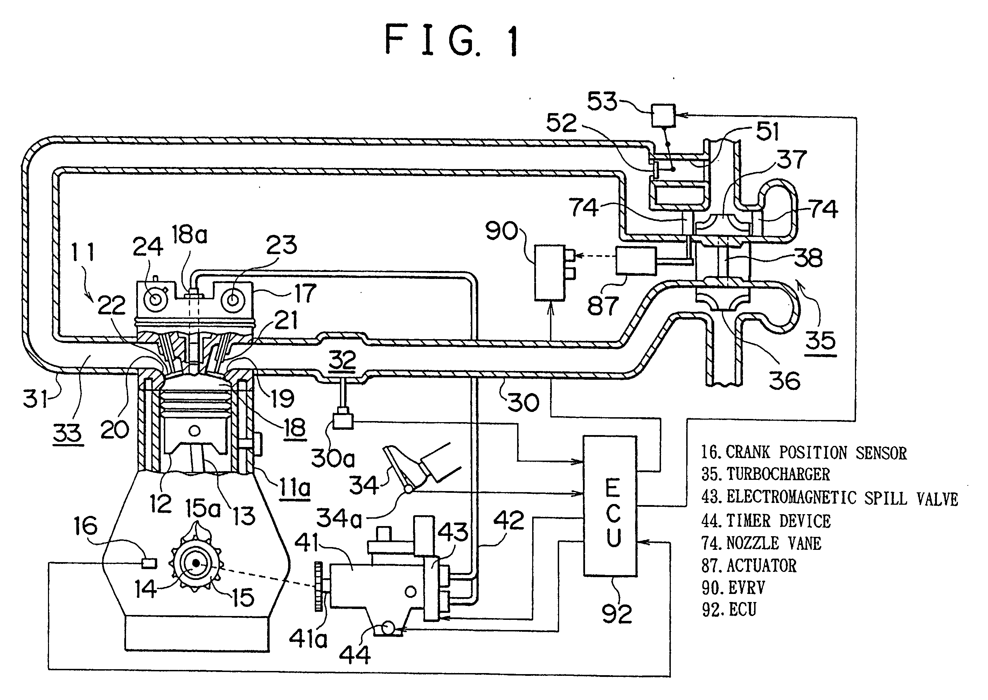

Fig. 1 illustrates the construction of a diesel engine equipped with a variable capacity type turbocharger and intake and exhaust systems. In a diesel engine 11, a piston 12 is provided for reciprocal movements in a cylinder block 11a. The piston 12 is connected, by a connecting rod 13, to a crank shaft (output shaft) 14 provided in a lower portion of the diesel engine 11. Reciprocating movements of the piston 12 are converted into rotational motion of the crank shaft 14 by the connecting rod 13.

A signal rotor 15 is attached to the crank shaft 14. A plurality of protrusions 15a are formed on an outer peripheral surface of the signal rotor 15, equiangularly about an axis of the crank shaft 14. Provided at a side of the signal rotor 15 is a crank position sensor 16 that detects the protrusions 15a and outputs a detection signal. When the crank shaft 14 is rotated, the protrusions 15a of the signal rotor 15 continually pass by the crank position sensor 16. Simultaneously, the crank position sensor 16 outputs a pulsed detection signal corresponding to each protrusion 15a that passes by.

A cylinder head 17 is disposed on an upper end of the cylinder block 11a. An inner peripheral surface of the cylinder head 17 and an upper end surface of the piston 12 define a combustion chamber 18. The cylinder head 17 is provided with a fuel injection nozzle 18a for injecting fuel into the combustion chamber 18. The cylinder head 17 has an intake port 19 and an exhaust port 20 that are connected to the combustion chamber 18. The intake port 19 and the exhaust port 20 are provided with an intake valve 21 and an exhaust valve 22, respectively.

An intake cam shaft 23 and an exhaust cam shaft 24 for opening and closing the intake valve 21 and the exhaust valve 22, respectively, are provided in upper portions of the cylinder head 17. The intake and exhaust cam shafts 23, 24 are drivingly connected to the crank shaft 14 by a timing belt (not shown). By a rotation of the intake cam shaft 23 in accordance with a rotation of the crank shaft 14, the intake valve 21 is opened and closed so that the intake port 19 communicates with and becomes shut off from the combustion chamber 18. Similarly, the exhaust valve 22 is opened and closed by a rotation of the exhaust cam shaft 24 so that the exhaust port 20 communicates with and becomes shut off from combustion chamber 18.

An intake pipe 30 and an exhaust pipe 31 are connected to the intake port 19 and the exhaust port 20, respectively. The intake port 19 and the intake pipe 30 define therein an intake passage 32. Similarly, the exhaust port 20 and the exhaust pipe 31 define therein an exhaust passage 33. The intake passage 32 is connected at an upstream portion thereof to a turbocharger 35. The exhaust passage 33 is connected at a downstream portion thereof to the turbocharger 35. The turbocharger 35 has a compressor wheel 36 for compressing and ejecting air downstream through the intake passage 32, and a turbine wheel 37 that is driven by exhaust gas flowing through the exhaust passage 33. The compressor wheel 36 and the turbine wheel 37 are interconnected by a rotor shaft 38 so that the wheels 36, 37 rotate together.

The exhaust passage 33 is provided with a waste gate 51 that connects the upstream side and the downstream side of the turbine wheel 37 in communication. The upstream port of the waste gate 51 is provided with a waste gate valve 52 that is opened and closed by a valve actuator 53. By opening and closing the waste gate valve 52, the upstream and downstream sides of the turbine wheel 37 in the exhaust passage 33 are connected to and shut off from each other. When the waste gate valve 52 is opened, a portion of exhaust gas flowing through the exhaust passage 33 flows through the waste gate 51, bypassing the turbine wheel 37, so that the amount of exhaust gas blown to the turbine wheel 37 decreases.

The intake passage 32 is provided with a pressure sensor 30a. The pressure sensor 30a detects pressure of air inside the intake passage 32, that is, supercharged pressure, and outputs to an electronic control unit (ECU) 92 a signal corresponding to the detected pressure.

The crank shaft 14 of the diesel engine 11 is also drivingly connected to a drive shaft 41a of a fuel injection pump 41. The fuel injection pump 41 is connected to the fuel injection nozzle 18a through a fuel line 42. The fuel injection pump 41 is driven by rotation transmitted from the crank shaft 14 to the drive shaft 41a. The fuel injection pump 41 draws fuel from a fuel tank (not shown), and pressurizes and ejects fuel toward the fuel injection nozzle 18a. The fuel injection nozzle 18a is driven by the pressure of fuel charged thereto by the fuel injection pump 41, so as to inject fuel into the combustion chamber 18.

The fuel injection pump 41 further has an electromagnetic spill valve 43 for adjusting the amount of fuel ejected toward the fuel injection nozzle 18a, and a timer device 44 for adjusting the fuel ejection starting timing. By adjusting the electromagnetic spill valve 43 and the timer device 44, it is possible to the adjust the amount of fuel injected into the combustion chamber 18 and the fuel injection timing.

An accelerator pedal 34 is provided with an accelerator sensor 34a that detects the amount of depression of the accelerator pedal 34. The accelerator sensor 34a outputs to the ECU 92 a detection signal corresponding to the detected amount of depression of the accelerator pedal 34.

Exhaust gas, discharged from the combustion chamber 18, flows through the exhaust passage 33 and strikes the turbine wheel 37 of the turbocharger 35. The blow of exhaust gas rotates the turbine wheel 37. The rotation is transmitted from the turbine wheel 37 to the compressor wheel 36 by the rotor shaft 38, thereby rotating the compressor wheel 36. When the compressor wheel 36 is thus rotated, air is compressed and forcibly sent downstream through the intake passage 32. Therefore, the amount of air that flows into the combustion chamber 18 increases. As the amount of air in the combustion chamber 18 increases, the amount of fuel combustible in the combustion chamber 18 also increases. Therefore, it becomes possible to perform adjustment so as to increase the amount of fuel injected from fuel injection nozzle 18a into the combustion chamber 18. In this manner, the efficiency in charging the combustion chamber 18 with fuel increases, so that the output of the diesel engine 11 can be increased.

A specific construction of the turbocharger 35 will be described in detail below.

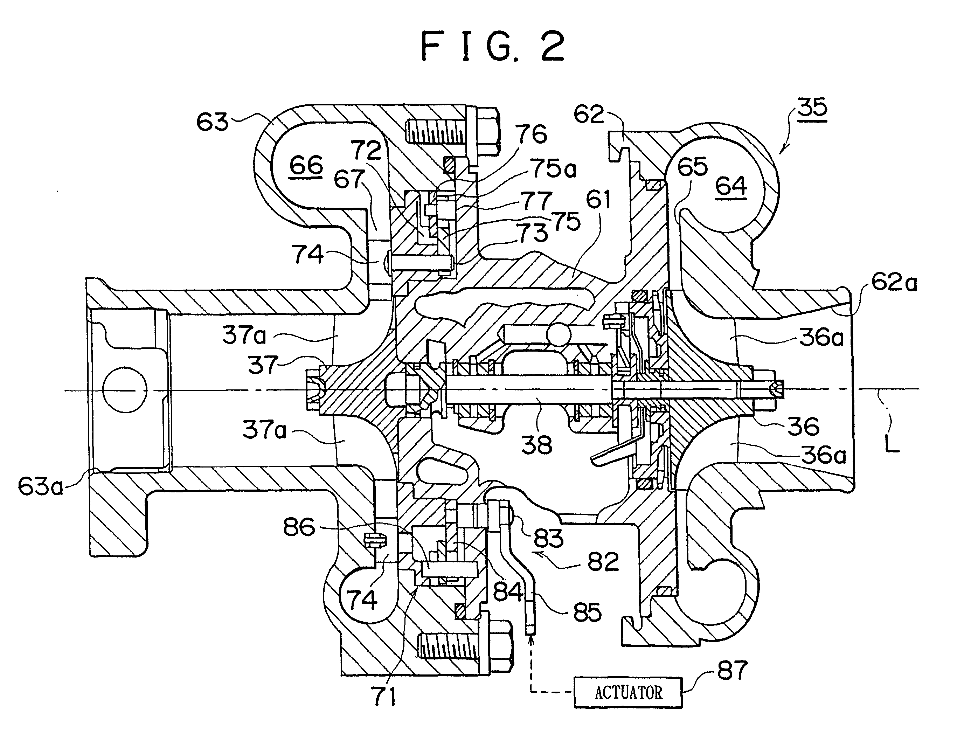

Fig. 2 illustrates the construction of the turbocharger 35 in a side sectional view. The turbocharger 35 has a center housing 61, a compressor housing 62 and a turbine housing 63. The center housing 61 supports the rotor shaft 38 so that the rotor shaft 38 is rotatable about its axis. The rotor shaft 38 is connected at one end thereof (right end in Fig. 2) to the compressor wheel 36 having a plurality of blades 36a, and at the other end (left end in Fig. 2) to the turbine wheel 37 having a plurality of blades 37a.

The compressor housing 62 is connected to one end of the center housing 61 in such a manner as to surround the outer periphery of the compressor wheel 36. The compressor housing 62 has an intake opening 62a at a side thereof opposite from the center housing 61. The intake opening 62a has a generally circular sectional shape with its center being the axis of the rotor shaft 38. Air is introduced into the compressor housing 62 through the intake opening 62a. The compressor housing 62 defines therein a spiral compressor passage 64 extending around the periphery of the compressor wheel 36. The compressor passage 64 communicates with the intake passage 32. Air introduced through the intake opening 62a is forcibly sent out toward the combustion chamber 18 through the intake passage 32 by rotation of the compressor wheel 36.

The turbine housing 63 is connected to the other side end of the center housing 61 in such a manner as to surround the outer periphery of the turbine wheel 37. The turbine housing 63 defines therein a scroll passage 66 extending in a spiral shape around the outer periphery of the turbine wheel 37. The scroll passage 66 communicates with the exhaust passage 33. Exhaust gas, discharged from the combustion chamber 18, is introduced into the scroll passage 66 through the exhaust passage 33.

Formed radially inward of the scroll passage 66 is an exhaust gas passage 67 for conducting exhaust gas from the scroll passage 66 toward the turbine wheel 37. Exhaust gas, conducted through the exhaust gas passage 67, is blown to the blades 37a of the turbine wheel 37, so that the turbine wheel 37 is rotated about the axis of the rotor shaft 38. After striking the turbine wheel 37, exhaust gas is let out to a catalytic converter, through an exhaust gas outlet 63a formed at a side of the turbine housing 63 opposite from the center housing 61.

A variable nozzle mechanism 71 that variably controls the flow velocity of exhaust gas blown to the turbine wheel 37 through the exhaust gas passage 67 will be described below.

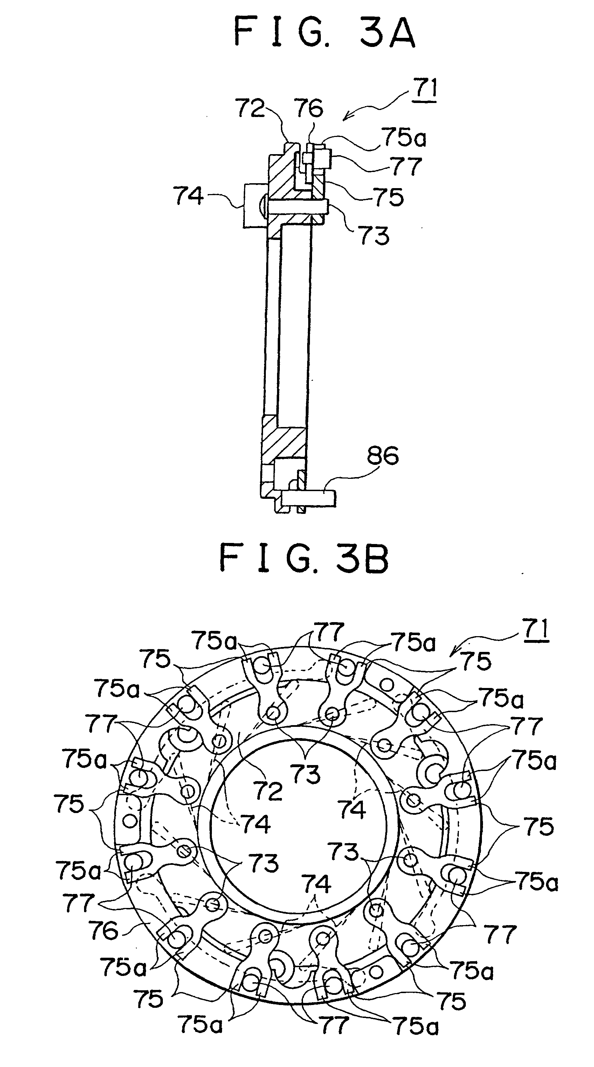

Figs. 3A and 3B show the construction of the variable nozzle mechanism 71 in a side sectional view and a front sectional view, respectively. The variable nozzle mechanism 71 is sandwiched between the center housing 61 and the turbine housing 63. As shown in Fig. 3A, the variable nozzle mechanism 71 has a ring-shaped nozzle back plate 72. The nozzle back plate 72 is provided with a plurality of shafts 73 disposed equiangularly about the center of the ring-shaped nozzle back plate 72. The shafts 73 extend through the nozzle back plate 72 in the direction of the thickness thereof, and are rotatably supported by the nozzle back plate 72. A nozzle vane 74 is fixed to one end of each shaft 73 (the left side end thereof in Fig. 3A). Disposed on the other end of each shaft 73 is an open-close lever 75 extending from the shaft 73 toward the outer circumference of the nozzle back plate 72. A distal end portion of each open-close lever 75 is forked into a pair of holding portions 75a.

A ring plate 76 is provided between the nozzle back plate 72 and the open-close levers 75. The ring plate 76 is movable about its circle center. The ring plate 76 is provided with a plurality of pins 77 disposed equiangularly about the circle center of the ring plate 76. Each pin 77 is disposed between the holding portions 75a of the corresponding open-close lever 75, and supports the open-close lever 75 rotatably.

When the ring plate 76 is turned about its circle center, each pin 77 pushes the corresponding holding portion 75a in the turning direction, so that the open-close lever 75 turns the corresponding shaft 73. As each shaft 73 turns, the corresponding nozzle vane 74 is turned about the axis of the shaft 73. In this manner, the nozzle variable mechanism synchronously turns the nozzle vanes 74 so as to adjust the size of interval gaps between adjacent nozzle vanes 74.

The variable nozzle mechanism 71 is fixed in a manner as indicated in Fig. 2, by fastening the nozzle back plate 72 to the turbine housing 63 by bolts (not shown). When the variable nozzle mechanism 71 is thus fixed, the nozzle vanes 74 are disposed in the exhaust gas passage 67.

A drive pin 86 is disposed in an outer circumferential edge portion of the ring plate 76. The drive pin 86 extends parallel to the rotation axis of the ring plate 76. The drive pin 86 is connected to a drive mechanism 82 for driving the variable nozzle mechanism 71.

The drive mechanism 82 has a support shaft 83 that is rotatably supported by the center housing 61. A drive lever 84 is fixed to one end of the support shaft 83 (the left side end in Fig. 2). The distal end of the drive lever 84 is rotatably connected to the drive pin 86.

The other end (the right side end in Fig. 2) of the support shaft 83 is fixed to an operating piece 85 that is connected to an actuator 87. When the operating piece 85 is operated by driving the actuator 87, the support shaft 83 is turned. Together with the support shaft 83, the drive lever 84 is turned about the axis of the support shaft 83. As a result, the drive lever 84 pushes the pin 86 so as to turn the ring plate 76 about its rotation axis. By turning the ring plate 76 in this manner, the nozzle vanes 74 are operated to open and close, that is, increase and decrease the nozzle opening defined by the nozzle vanes 74.

By turning the nozzle vanes 74 in the closing or opening direction, the flow velocity of exhaust gas blown to the turbine wheel 37 is changed, so that the rotating speed of the turbine wheel 37, the rotor shaft 38 and the compressor wheel 36 changes. A change in the rotating speed changes the flow rate of air ejected by the compressor wheel 36. Therefore, by controlling the position of the nozzle vane 74 in the opening or closing direction, it is possible to adjust the amount of air supercharged into the combustion chamber 18.

Next described will be the actuator 87 for driving the drive mechanism 82 and a drive device for driving the actuator 87.

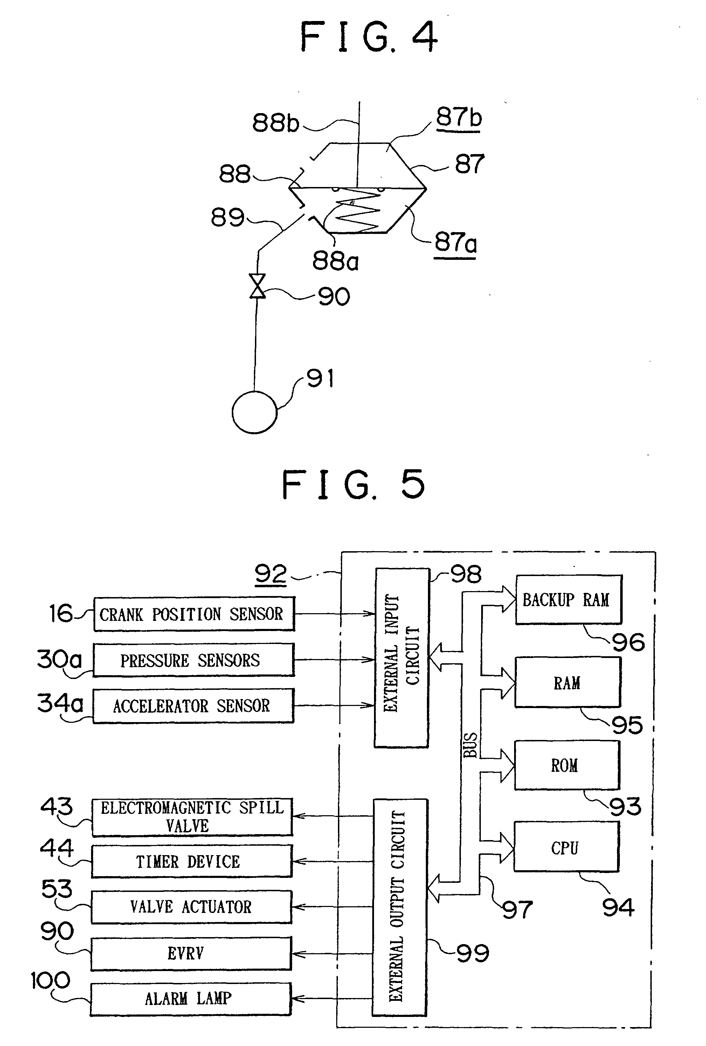

Fig. 4 schematically illustrates the construction of the actuator 87 and the drive device thereof. The inner space of the actuator 87 is separated into a negative pressure chamber 87a and an atmospheric pressure chamber 87b by a diaphragm 88. A coil spring 88a is disposed in the negative pressure chamber 87a for contraction and expansion in directions substantially perpendicular to the diaphragm 88. A negative pressure passage 89 is connected to the negative pressure chamber 87a. The atmospheric pressure chamber 87b communicates with the outside of the actuator 87, so that the pressure inside the atmospheric pressure chamber 87b equals an atmospheric pressure or ambient air pressure.

The diaphragm 88 is provided with a rod 88b extending in the direction of contraction and expansion of the coil spring 88a and protruding out from the actuator 87. The rod 88b is connected to the operating piece 85 (Fig. 2) of the drive mechanism 82 for opening and closing the nozzle vanes 74.

The negative pressure passage 89 is connected to a vacuum pump 91 that is drivingly connected to the crank shaft 14 of the diesel engine 11. The vacuum pump 91 draws air from the negative pressure passage 89 so that the negative pressure in the negative pressure passage 89 becomes a constant value.

An electric vacuum regulating valve (EVRV) 90 is provided partway of the negative pressure passage 89. The EVRV 90 has an electromagnetic solenoid (not shown). The current supplied to the electromagnetic solenoid is duty-controlled by the ECU 92 so that the valve opening of the EVRV 90 is adjusted.

As the opening of the EVRV 90 is adjusted, the amount of air drawn from the negative pressure chamber 87a toward the vacuum pump 91 is adjusted, so that there occurs a difference between the pressure in the negative pressure chamber 87a and the pressure in the atmospheric pressure chamber 87b. The diaphragm 88 is then displaced to a position at which the differential pressure across the diaphragm 88 balances the spring force of the coil spring 88a. By the displacement of the diaphragm 88, the amount of protrusion of the rod 88b connected to the diaphragm 88 is appropriately changed. As a result, the opening formed by the nozzle vanes 74 in the turbocharger 35 is appropriately adjusted, whereby the amount of air forcibly sent into the combustion chamber 18 (Fig. 1) by the turbocharger 35, that is, the pressure of air supercharged into the combustion chamber 18, is appropriately adjusted.

The electrical construction of the diesel engine 11 according to the embodiment will be described with reference to Fig. 5.

The nozzle opening control device includes the ECU 92 for controlling various operating conditions of the diesel engine 11, such as the fuel injection timing, the amount of fuel to be injected (fuel injection amount), the idling revolution speed, and the like. The ECU 92 is formed as a logic unit equipped with a ROM 93, a CPU 94, a RAM 95, a backup RAM 96, and the like.

The ROM 93 is a memory in which various control programs, maps that are referred to for execution of the various control programs, and the like are stored. The CPU 94 executes operations based on the various control programs and maps stored in the ROM 93. The RAM 95 is a memory for temporarily storing results of operations by the CPU 94, data inputted from various sensors, and the like. The backup RAM 96 is a non-volatile memory for storing data that needs to be temporarily retained while the diesel engine 11 is stopped. The ROM 93, the CPU 94, the RAM 95 and the backup RAM 96 are interconnected by busses 97, and also connected to an external input circuit 98 and an external output circuit 99 by the busses 97.

The external input circuit 98 is connected to various detection devices, such as the crank position sensor 16, the accelerator sensor 34a, the pressure sensor 30a, and the like, for detecting various operating conditions of the diesel engine 11. The external output circuit 99 is connected to the valve actuator 53, the electromagnetic spill valve 43, the timer device 44, the EVRV 90 and an alarm lamp 100. The alarm lamp 100 is provided at a driver's seat side. If the closed abnormality of the nozzle vanes 74 occurs, the alarm lamp 100 is turned on to inform a driving person of the occurrence of the closed abnormality.

The ECU 92 constructed as described above calculates an engine revolution speed NE and a crank angle based on the detection signals from the crank position sensor 16 and a cam position sensor (not shown), and calculates a target value of the fuel injection timing based on the engine revolution speed NE and the crank angle. The ECU 92 detects the amount of depression of the accelerator pedal 34 based on the detection signal from the accelerator sensor 34a, and calculates a fuel injection amount instruction value based on the amount of depression and the engine revolution speed NE. Based on the fuel injection amount instruction value and the fuel injection timing target value calculated as described above, the ECU 92 drives and controls the electromagnetic spill valve 43 and the timer device 44. Therefore, the amount of fuel corresponding to the fuel injection amount instruction value is injected, and the fuel injection timing is adjusted closer to the fuel injection timing target value. By controlling the fuel injection amount and the fuel injection timing in this manner, it is possible to maintain good operating conditions of the diesel engine 11.

Next described will be the variable capacity control of the turbocharger 35 performed by the ECU 92.

The ECU 92 calculates a target value of supercharged pressure achieved by the turbocharger 35, on the basis of the engine revolution speed NE, the fuel injection amount, and the like. The ECU 92 compares the supercharged pressure 5 target value with an actual supercharged pressure detected by the pressure sensor 30a, and adjusts a nozzle duty ratio instruction value VNduty that is to be outputted to the EVRV 90. Based on the nozzle duty ratio instruction value VNduty, the ECU 92 changes the opening of the EVRV 90. As the EVRV 90 changes its valve opening, the actuator 87 is driven so that the nozzle vanes 74 are operated in the opening or closing direction.

In this embodiment, as the nozzle duty ratio instruction value VNduty increases, the nozzle vane opening is increased. This embodiment is based on a generally termed normal closed system where when the nozzle duty ratio instruction value VNduty is 0%, the nozzle vanes 74 are completely closed, and where when the nozzle duty ratio instruction value VNduty is 100%, the nozzle vanes 74 are fully opened. In this embodiment, in normal engine operating conditions, the nozzle vane opening is controlled within the range of the nozzle duty ratio instruction value VNduty of 30% to 70%.

Next described will be an abnormality determining method for a variable capacity type turbocharger, and an engine control method, according to the embodiment.

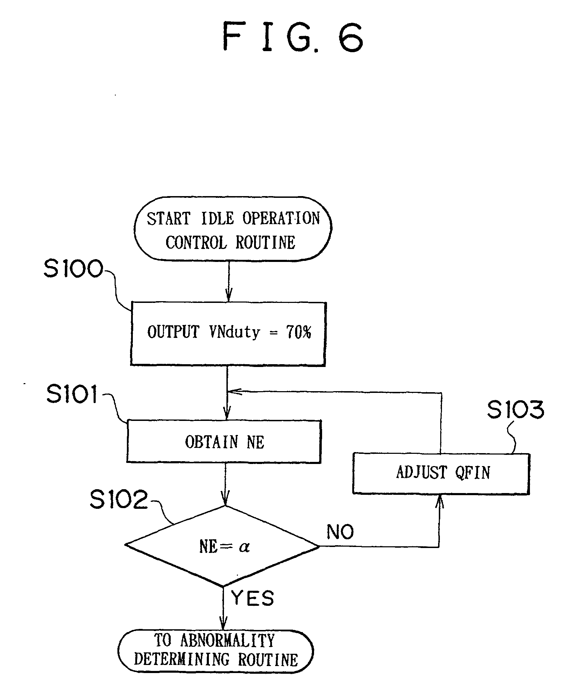

The engine control is performed at the time of idling, that is, when the diesel engine 11 is idling with the amount of depression of the accelerator pedal 34 remaining at zero. The engine control performed during idling will be described with reference to the flowchart shown in Fig. 6. The routine illustrated in Fig. 6 is executed by the ECU 92 during idling.

In this routine, the ECU 92 outputs a nozzle duty ratio instruction value VNduty of 70% to the EVRV 90 in step S100. On the basis of the nozzle duty ratio instruction value VNduty, the opening of the nozzle vanes 74 of the turbocharger 35 is set so that the opening becomes the maximum opening (70%) at the time of normal engine operation.

Subsequently, in step S101, the ECU 92 detects an engine revolution speed NE based on the detection signal from the crank position sensor 16.

In step S102, the ECU 92 compares the engine revolution speed NE detected in step S101 with a predetermined engine revolution speed α preset for an idling operation. The predetermined revolution speed α is preset to a revolution speed at which the diesel engine 11 can be stably operated and the vehicle can be smoothly pulled off when the accelerator pedal 34 is depressed.

More strictly speaking, the predetermined revolution speed α takes different values in accordance with the engine operating conditions. For example, when the air-conditioner is in operation, the predetermined revolution speed α is increased. That is, a so-called idle-up control may be performed. In the case of an automatic transmission-equipped vehicle, different predetermined revolution speeds a are set for the neutral range and for the drive range. Furthermore, it is possible to change the engine revolution speed set for the idling in accordance with various conditions such as ambient air pressure, engine temperature and the like. However, in the description herein, it is assumed that the predetermined revolution speed α is always constant.

If the comparison in step S102 determines that the engine revolution speed NE is not equal to the predetermined revolution speed α, the ECU 92 executes the processing in step S103. In step S103, the ECU 92 adjusts the amount of fuel to be injected (fuel injection amount) QFIN so that the engine revolution speed NE approaches the predetermined revolution speed α. After thus adjusting the fuel injection amount QFIN, the ECU 92 returns to step S101, where an engine revolution speed NE is detected again.

By repeating steps S101, S102 and S103, the ECU 92 adjusts the engine revolution speed NE to the predetermined revolution speed α. When it is determined in step S102 that the engine revolution speed NE equals the predetermined revolution speed α, the ECU 92 proceeds to a turbocharger abnormality determining routine.

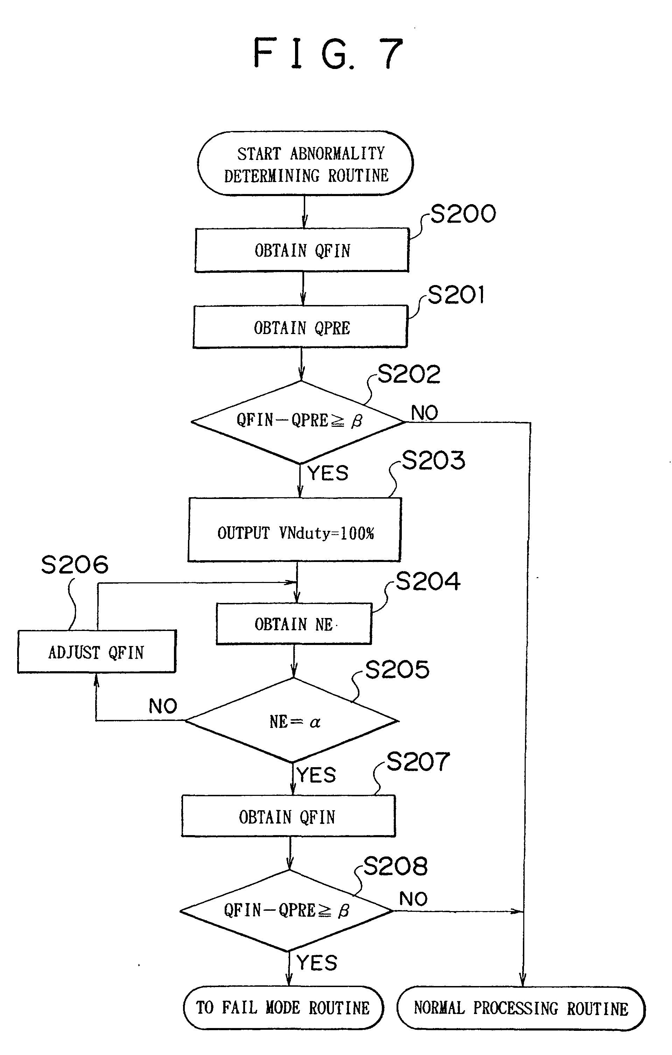

The turbocharger abnormality determining routine will be described with reference to the flowchart shown in Fig. 7.

When the diesel engine 11 is stopped, the nozzle vanes 74 are completely closed. A case may happen where the nozzle vanes 74 or a movable member in the mechanism for adjusting the opening of the nozzle vanes 74 becomes stuck (fixed) so that it becomes impossible to adjust the opening of the nozzle vanes 74. In the routine illustrated in Fig. 7, it is determined whether the nozzle vanes 74 are in an opening adjustment impossible condition.

In the abnormality determining routine, the ECU 92 obtains a present fuel injection amount QFIN calculated from the fuel injection amount instruction value and the like in step S200. Subsequently in step S201, the ECU 92 obtains a reference fuel injection amount QPRE from the RAM 95 or the backup RAM 96. The reference fuel injection amount QPRE is the fuel injection amount QFIN that was stored after the normal operation of the turbocharger was confirmed during the previous execution of this routine. This storing operation is performed in step S400 in a normal processing routine described below.

Subsequently in step S202, the ECU 92 determines whether the difference between the present fuel injection amount QFIN and the reference fuel injection amount QPRE is equal to or greater than a preset criterion value β.

The relationship between the fuel injection amount QFIN and the nozzle vane opening during idling will be described. When the diesel engine 11 is operated at a low speed and a low load, for example, during idling, substantially no supercharging effect by the turbocharger 35 can be expected. If the nozzle vane opening is reduced in this case, the flow resistance against exhaust gas passing by the nozzle vanes 74 increases so that the pressure in the exhaust passage 33, that is, back pressure, increases. If the back pressure increases, the pumping loss during the discharge stroke of the diesel engine 11 increases and, therefore, the engine revolution speed NE decreases. Consequently, to adjust the engine revolution speed NE to the predetermined revolution speed α when the nozzle vane opening is small, the ECU 92 needs to perform adjustment such that the fuel injection amount QFIN becomes greater than that in an ordinary condition.

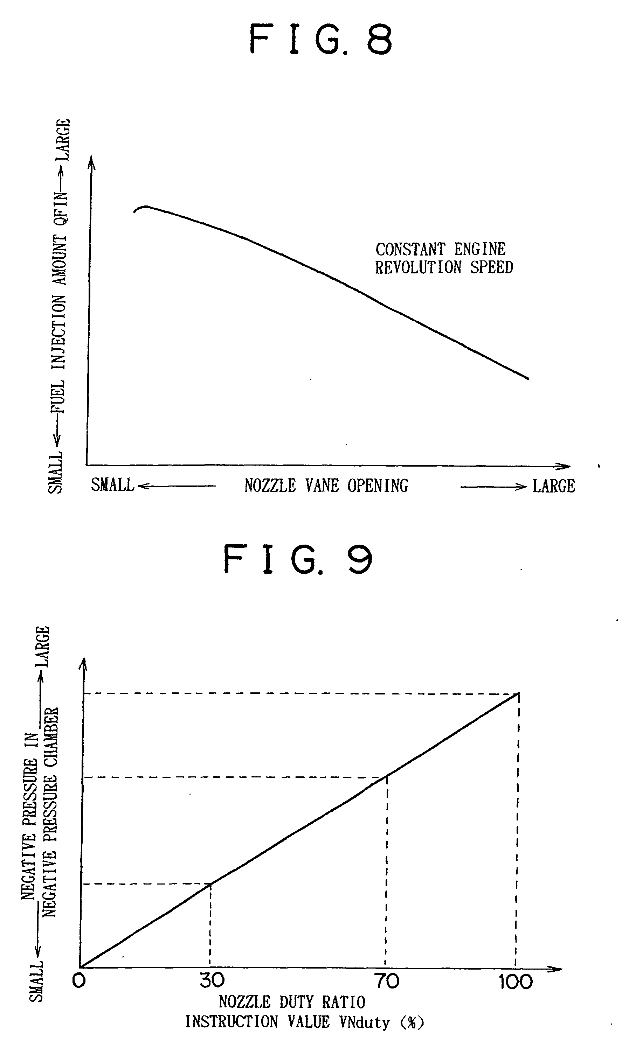

Fig. 8 shows a graph indicating the relationship between the nozzle vane opening and the fuel injection amount QFIN needed to adjust the engine revolution speed NE to the predetermined revolution speed α. As indicated in the graph, the fuel injection amount QFIN during idling monotonously increases as the nozzle vane opening decreases. Therefore, it is possible to estimate a nozzle vane opening from the needed fuel injection amount QFIN. However, the needed fuel injection amount QFIN varies to some extent depending on various operating conditions such as engine temperature, atmospheric pressure, and the like. Therefore, the criterion value β is set so that it can be determined whether the nozzle vanes 74 is at a predetermined opening degree, on consideration of the variation depending on the operating conditions.

Therefore, in the abnormality determining routine illustrated in Fig. 7, if the difference between the present fuel injection amount QFIN and the reference fuel injection amount QPRE is equal to or greater than the criterion value β, it is determined that the nozzle vanes 74 are not opened to the predetermined opening degree. The ECU 92 then proceeds to step S203. If the difference is less than the criterion value β, it is determined that the nozzle vanes 74 are operating normally. Then the ECU 92 proceeds to the normal processing routine.

If it is determined in step S202 that the closed-nozzle abnormality has occurred, the ECU 92 outputs a nozzle duty ratio instruction value VNduty of 100% to the EVRV 90 in step S203. Upon this instruction, the EVRV 90 becomes fully open, thereby increasing the negative pressure in the negative pressure chamber 87a of the actuator 87.

Fig. 9 shows a graph indicating the relationship between the nozzle duty ratio instruction value VNduty and the negative pressure in the negative pressure chamber 87a of the actuator 87. As indicated in the graph, the negative pressure in the negative pressure chamber 87a increases as the nozzle duty ratio instruction value VNduty increases. The negative pressure becomes maximum when the instruction value VNduty is 100%. Since the actuator 87 operates the nozzle vanes 74 on the basis of the negative pressure in the negative pressure chamber 87a, this instruction (100%) causes the nozzle vanes 74 to be operated with the maximum force.

The processing in step S203 is provided because if a great force is used to operate the nozzle vane 74, the nozzle vanes 74 or a related movable member will likely be released from the stuck state.

In the process of steps S204 through S206, the ECU 92 performs a control in which the engine revolution speed NE is adjusted to the predetermined revolution speed a while the fuel injection amount QFIN is adjusted, as in the process of steps S101 through S103.

Subsequently in step S207, the ECU 92 obtains a present fuel injection amount QFIN similarly to the processing in step S201. In step S208, the ECU 92 determines whether there is an abnormality in the adjustment of the opening of the nozzle vanes 74 on the basis of the fuel injection amount QFIN obtained in step S207, similarly to the processing in step S202. If it is determined in step S208 that the operation is normal, the ECU 92 determines that the abnormality in the adjustment of the opening of the nozzle vanes 74 has been removed. Then the ECU 92 returns to the normal processing routine. Conversely, if it is determined that the operation is abnormal, the ECU 92 proceeds to a fail mode routine in order to perform an operation for coping with the abnormality in the nozzle vane opening adjusting mechanism.

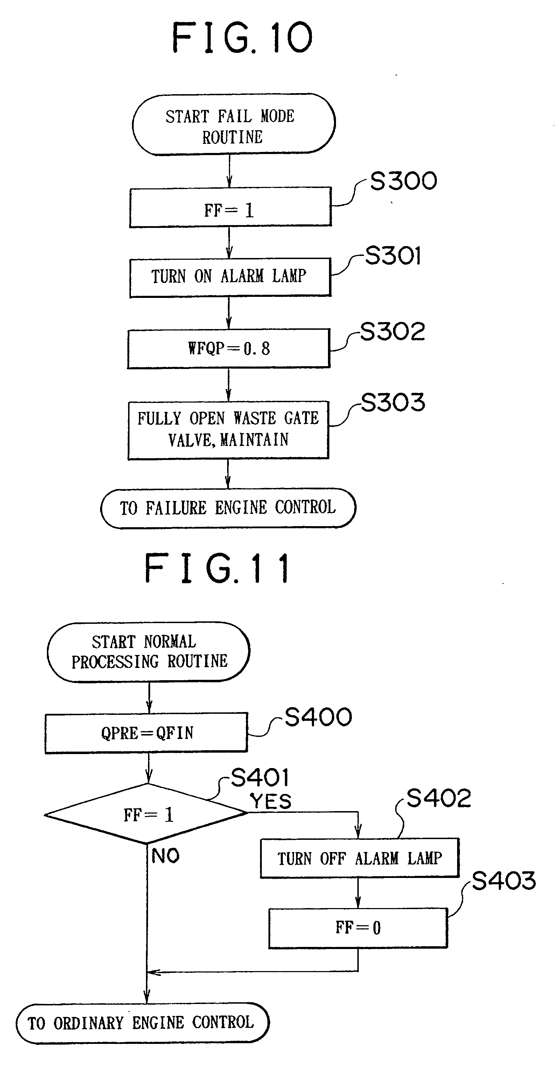

The fail mode routine will be described with reference to the flowchart shown in Fig. 10.

In step S300, the ECU 92 sets "1" in a fail flag FF and records it into the RAM 95 or the backup RAM 96. Subsequently in step S301, the ECU 92 turns on the alarm lamp 100 provided at the driver's seat side, to inform the driver of the abnormality of the nozzle vanes 74.

In step S302, the ECU 92 fixes a supercharged pressure coefficient WQFP to 0.8, and reduces the fuel injection amount.

If fuel is injected into the combustion chamber 18 at an excessive proportion, incomplete combustion will occur in the explosion stroke of the diesel engine 11. If incomplete combustion occurs, exhaust gas from the combustion chamber 18a contains large amounts of particulate, such as soot, unburned fuel and the like, so that smoke will occur in emissions from the exhaust passage 33 into the atmosphere. However, the setting of the supercharged pressure coefficient WQFP to a relatively low value, for example, 0.8, reduces the fuel injection amount during operation. By reducing the fuel injection amount, the occurrence of smoke can be prevented or considerably reduced.

Subsequently in step S303, the ECU 92 outputs an instruction signal to the valve actuator 53 so as to fully open the waste gate valve 52 and maintain the full open state. At the time of abnormality, the opening of the nozzle vanes 74 is not sufficiently large, so that the flow resistance against exhaust gas flowing through the turbine wheel 37 increases. If the waste gate valve 52 is fully opened in such a condition, a major portion of exhaust gas in the exhaust passage 33 passes through the waste gate 51. By establishing smooth exhaust gas flow in this manner, the increase of the back pressure is checked or reduced.

By this operation, the drawbacks caused by the opening-closing operation failure of the nozzle vanes 74 are controlled. Therefore, although the improved performance by the supercharging effect may not be expected, the vehicle is still able to run with performance as good as a normally aspirated-engine vehicle. After that, the ECU 92 proceeds to the failure engine control in which the engine is controlled while the processing in steps S302, S303 is continued.

The normal processing routine that is performed if it is determined that there is no abnormality in step S202 or S208 in the abnormality determining routine will be described with reference to the flowchart shown in Fig. 11.

In step S400 in Fig. 11, the ECU 92 substitutes the reference fuel injection amount QPRE with the present fuel injection amount QFIN. By updating the reference fuel injection amount QPRE in this manner, the control adapts to variations among individual engines, changes over time, environmental conditions of use, and the like.

Subsequently in step S401, the ECU 92 determines whether the fail flag FF is "1". If the fail flag FF is "0", the ECU 92 immediately proceeds to the ordinary engine control.

Conversely, if the fail flag FF is "1", it means that during the previous operation of the diesel engine 11, the abnormality was detected and the engine control was performed in the fail mode. In this case, it is considered that the abnormality has been removed. Then the ECU 92 turns off the alarm lamp 100 in step S402, and sets "0" in the fail flag FF in step S405. After that, the operation of the ECU 92 proceeds to the ordinary engine control.

The embodiment as described above achieves advantages as follows.

The embodiment is able to determine whether the closed abnormality of the nozzle vanes 74 has occurred, without requiring provision of a detection device for directly detecting the opening of the nozzle vanes 74. Therefore, the cost can be reduced, and the apparatus construction can be simplified.

The embodiment is also able to determine whether the closed abnormality of the nozzle vanes 74 has occurred, even when the amount of intake air is small and the difference in the opening of the nozzle vanes 74 does not make a significant difference in the supercharged pressure, for example, even during idling.

After it is determined that the closed nozzle abnormality has occurred, the embodiment outputs an instruction to forcibly open the nozzle vanes 74 to a fully open state, and then performs the abnormality determination again. In some cases, the forcible full-open instruction removes the abnormality. For example, when the opening adjustment has become impossible due to mere sticking or fixation of the nozzle vanes 74 or the like, the nozzle vanes 74 or the like can be brought back to a normal state by the aforementioned instruction. It is also possible to reduce the number of times of proceeding to the fail mode or of turning on the alarm lamp 100.

During the fail mode, the fuel injection amount is reduced, and the waste gate is fully opened. Therefore, the embodiment ensures that the vehicle can run with performance as good as that of a normally-aspirated vehicle even when the closed nozzle abnormality has occurred.

The actuator 87 operates the nozzle vanes 74 in such a manner that the nozzle vanes 74 are completely closed when the diesel engine 11 is stopped, and the nozzle vanes 74 are fully opened (70%) when the engine is operating at a maximum performance. In some cases, this operation removes the closed nozzle abnormality. Even though during the previous engine operation, it was determined that the abnormality occurred, and the fail mode operation was performed, the embodiment determines whether there is an abnormality when the engine is started again. If the abnormality has been removed, the embodiment immediately returns to the ordinary engine control.

The foregoing embodiment performs control so as to adjust the engine revolution speed to a predetermined value by adjusting the fuel injection amount during idling, and then uses the adjusted fuel injection amount as a parameter for the abnormality determination. However, it is also possible to use the adjusted fuel injection amount as a parameter for the abnormality determination depending on the degree of reduction of the engine revolution speed.

It is also possible to use as an abnormality determination parameter an operation control state quantity or property that changes with changes in engine output related to the closed abnormality of the nozzle vanes 74. Examples of such operation control state quantity include the fuel injection timing and, in the case of a gasoline engine, the fuel ignition timing, and the like. If the relationship between the state quantity and the nozzle vanes 74 under predetermined engine operating conditions is determined through experiments or by the learning, and the like, it becomes possible to indirectly calculate the opening of the nozzle vanes 74 from the state quantity, so that the abnormality determination can be performed.

Furthermore, it is also possible to use feedback amount as a value indicating a operation control state of engine, so that a possibility of an occurrence of erroneous determination caused another factor can be reduced.

The execution of the abnormality determination as described above is not limited to the idling operation. The abnormality determination may be performed under any engine operating condition as long as the condition is a condition where the relationship between the opening of the nozzle vanes 74 and the operation control state can be obtained.

Furthermore, the abnormality determining method of this embodiment may also be performed in combination with an abnormality determining method based on detection of a change in the supercharged pressure.

With such a combination, it becomes possible to determine whether there is an abnormality due to an operation failure of the variable capacity control mechanism, without requiring a special detection device. Furthermore, by fully opening the waste gate, exhaust gas can be bypassed around the turbocharger when the abnormality has occurred. Consequently, the stable running of the vehicle can be maintained even if the abnormality occurs.

An abnormality determining method for a variable capacity type turbocharger always properly determines whether there is an abnormality in a variable capacity mechanism. During engine idling, an ECU adjusts the fuel injection amount by controlling an electromagnetic spill valve , in order to adjust the engine revolution speed to a predetermined value. If nozzle vanes of the turbocharger are accidentally fixed in a closed state, the exhaust gas flow is impeded so that the engine output decreases. To correct the reduced output, the ECU increases the fuel injection amount. A fuel injection amount during a normal operation is pre-stored in the ECU. The ECU compares a present fuel injection amount with the pre-stored fuel injection amount. If the difference therebetween is equal to or greater than a predetermined value, the ECU determines that an abnormality has occurred in the variable capacity mechanism.

## Claims

1. An abnormality determining method for a variable capacity type turbocharger (35) which operates on the basis of an exhaust gas flow from an internal combustion engine (11) so as to supercharge a combustion chamber (18) of the internal combustion engine (11) with intake air and which has a variable capacity mechanism (74) for variably controlling an amount of exhaust gas introduced into the variable capacity type turbocharger (35) so that the amount of operation of the variable capacity type turbocharger (35) is controlled,
**characterized in that**
if a difference between an actual value indicating an engine control state detected as a turbocharger-unspecific characteristic value and a reference value indicating an engine control state under a predetermined operating condition of the internal combustion engine (11) is equal to or greater than a predetermined value, it is determined that there is an abnormality in the variable capacity mechanism (74).

2. An abnormality determining method for a variable capacity type turbocharger (35) according to claim 1, wherein the value indicating an engine control state is an output control characteristic value including at least one of an amount of fuel injected, a fuel injection timing and an ignition timing.

3. An abnormality determining method for a variable capacity type turbocharger (35) according to claim 1, wherein the value indicating an engine control state is a revolution speed of the internal combustion engine (11).

4. An abnormality determining method for a variable capacity type turbocharger (35) according to claim 1, wherein the predetermined operating condition is an idling condition of the internal combustion engine (11), and the value indicating an engine control state is an amount of fuel injected into the internal combustion engine (11).

5. An abnormality determining method for a variable capacity type turbocharger (35) according to any one of claims 1 through 4,
wherein, when the abnormality is preliminary determined, an instruction to drive the variable capacity mechanism (74) at a maximum degree is outputted, and
wherein, when subsequently the abnormality is determined again, it is finally determined that there is an abnormality in the variable capacity mechanism (74).

6. An abnormality determining method for a variable capacity type turbocharger (35) according to any one of claims 1 through 5, wherein a waste gate valve (52) is provided in an exhaust system (31, 33) of the internal combustion engine (11) for opening and closing a passage (51) bypassing a turbine portion (37),
and the waste gate valve (52) is opened, if the abnormality in the variable capacity mechanism (74) is determined.

7. An abnormality determining method for a variable capacity type turbocharger (35) according to claim 6 as far as this claim relates back to claim 5,
wherein the waste gate valve (52) is opened, if the abnormality is finally determined.

8. An abnormality determining system for a variable capacity type turbocharger (35) which operates on the basis of an exhaust gas flow from an internal combustion engine (11) so as to supercharge a combustion chamber (18) of the internal combustion engine (11) with intake air and which has a variable capacity mechanism (74) for variably controlling an amount of exhaust gas introduced into the variable capacity type turbocharger (35) so that the amount of operation of the variable capacity type turbocharger (35) is controlled,
**characterized in that**
if a difference between an actual value indicating an engine control state detected as a turbocharger-unspecific characteristic value and a reference value indicating an engine control state under a predetermined operating condition of the internal combustion engine (11) is equal to or greater than a predetermined value, the system determines that there is an abnormality in the variable capacity mechanism (74).

9. An abnormality determining method for a variable capacity type turbocharger (35) according to claim 1, wherein the value indicating an engine control state is a feedback control value.

## Patentansprüche

1. Annormalitätsbestimmungsverfahren für einen Turbolader (35) der Art mit variablem Leistungsvermögen, der auf der Grundlage einer Abgasströmung von einem Verbrennungsmotor (11) so arbeitet, dass er eine Verbrennungs kammer (18) des Verbrennungsmotors (11) mit Einlassluft auflädt und der einen Variabel-Leistungs-Mechanismus (74) hat, um eine in den Turbolader (35.) der Art mit variablem Leistungsvermögen eingeleitete Menge an Abgas variabel so zu steuern, dass der Betätigungsbetrag des Turboladers (35) der Art mit variablem Leistungsvermögen gesteuert wird,
**dadurch gekennzeichnet, dass**
wenn eine Differenz zwischen einem tatsächlichen Wert, der einen Motorsteuerzustand anzeigt, der als ein für einen Turbolader nicht spezifischer Eigenschaftswert erfasst wird, und einem Referenzwert, der einen Motorsteuerzustand bei einem vorbestimmten Betriebszustand des Verbrennungsmotors (11) anzeigt, gleich oder größer als ein vorbestimmter Wert ist, bestimmt wird, dass eine Annormalität bei dem Variabel-Leistungs-Mechanismus (74) vorhanden ist.

2. Annormalitätsbestimmungsverfahren für einen Turbolader (35) der Art mit variablem Leistungsvermögen gemäß Anspruch 1, wobei
der einen Motorsteuerzustand anzeigende Wert ein Abgabesteuereigenschaftswert ist, der zumindest entweder eine eingespritzte Kraftstoffmenge, eine Kraftstoffeinspritzzeit oder eine Zündzeit umfasst.

3. Annormalitätsbestimmungsverfahren für einen Turbolader (35) der Art mit variablem Leistungsvermögen gemäß Anspruch 1, wobei
der einen Motorsteuerzustand anzeigende Wert eine Drehzahl des Verbrennungsmotors (11) ist.

4. Annormalitätsbestimmungsverfahren für einen Turbolader (35) der Art mit variablem Leistungsvermögen gemäß Anspruch 1, wobei
der vorbestimmte Betriebszustand ein Leerlaufzustand des Verbrennungsmotors (11) ist und der einen Motorsteuerzustand anzeigende Wert eine Kraftstoffmenge ist, die in den Verbrennungsmotor (11) eingespritzt wird.

5. Annormalitätsbestimmungsverfahren für einen Turbolader (35) der Art mit variablem Leistungsvermögen gemäß einem der Ansprüche 1 bis 4, wobei
wenn die Annormalität zuvor bestimmt wird, ein Befehl zum Antreiben des Variabel-Leistungs-Mechanismus (74) bei maximalen Grad ausgegeben wird und
wenn anschließend die Annormalität erneut bestimmt wird, schließlich bestimmt wird, dass eine Annormalität bei dem Variabel-Leistungs-Mechanismus (74) vorhanden ist.

6. Annormalitätsbestimmungsverfahren für einen Turbolader (35) der Art mit variablem Leistungsvermögen gemäß einem der Ansprüche 1 bis 5, wobei
ein Ablassdurchlassventil (52) in einem Abgassystem (31, 33) des Verbrennungsmotors (11) vorgesehen ist, um einen Kanal (51) zu öffnen und zu schließen, der einen Turbinenabschnitt (37) umgeht,
und das Ablassdurchlassventil (52) geöffnet wird, wenn die Annormalität bei dem Variabel-Leistungs-Mechanismus (74) bestimmt wird.

7. Annormalitätsbestimmungsverfahren für einen Turbolader (35) der Art mit variablem Leistungsvermögen gemäß Anspruch 6, sofern sich dieser Anspruch auf Anspruch 5 zurück bezieht, wobei
das Ablassdurchlassventil (52) geöffnet wird, wenn die Annormalität schließlich bestimmt wird.

8. Annormalitätsbestimmungssystem für einen Turbolader (35) der Art mit variablem Leistungsvermögen, der auf der Grundlage einer Abgasströmung von einem Verbrennungsmotor (11) arbeitet, um so eine Verbrennungskammer (18) des Verbrennungsmotors (11) mit Einlassluft aufzuladen, und der einen Variabel-Leistungs-Mechanismus (74) hat, um eine in den Turbolader (35) der Art mit variablem Leistungsvermögen eingeleitete Abgasmenge variabel so zu steuern, dass der Betrag der Betätigung des Turboladers (35) der Art mit variablem Leistungsvermögen gesteuert wird,
**dadurch gekennzeichnet, dass**
wenn eine Differenz zwischen einem tatsächlichen Wert, der einen Motorsteuerzustand anzeigt, der als ein für einen Turbolader nicht spezifischer Eigenschaftswert bestimmt wird, und einem Referenzwert, der einen Motorsteuerzustand bei einem vorbestimmten Betriebszustand des Verbrennungsmotors (11) anzeigt, gleich oder größer als ein vorbestimmter Wert ist, das System bestimmt, dass eine Annormalität bei dem Variabel-Leistungs-Mechanismus (74) vorhanden ist.

9. Annormalitätsbestimmungsverfahren für einen Turbolader (35) der Art mit variablem Leistungsvermögen gemäß Anspruch 1, wobei
der einen Motorsteuerzustand anzeigende Wert ein Rückkopplungssteuerwert ist.

## Revendications

1. Procédé de détermination d'une anomalie pour un turbocompresseur du type à capacité variable (35) qui fonctionne sur la base d'un flux de gaz d'échappement provenant d'un moteur à combustion interne (11) de façon à surcomprimer une chambre de combustion (18) du moteur à combustion interne (11) avec de l'air d'admission et qui comporte un mécanisme à capacité variable (74) destiné à commander de façon variable une quantité de gaz d'échappement introduite dans le turbocompresseur du type à capacité variable (35) de sorte que la valeur d'actionnement du turbocompresseur du type à capacité variable (35) est commandée, **caractérisé en ce que**
si une différence entre une valeur réelle indiquant un état de commande du moteur détectée en tant que valeur caractéristique non spécifique au turbocompresseur et une valeur de référence indiquant un état de commande du moteur dans une condition de fonctionnement prédéterminée du moteur à combustion interne (11) est supérieure ou égale à une valeur prédéterminée, il est défini qu'il existe une anomalie dans le mécanisme à capacité variable (74).

2. Procédé de détermination d'anomalie pour un turbocompresseur du type à capacité variable (35) selon la revendication 1, dans lequel la valeur indiquant un état de commande du moteur est une valeur caractéristique de commande de sortie comprenant au moins une valeur parmi une quantité de carburant injecté, une synchronisation d'injection de carburant et une synchronisation d'allumage.

3. Procédé de détermination d'anomalie destiné à un turbocompresseur du type à capacité variable (35) selon la revendication 1, dans lequel la valeur indiquant un état de commande du moteur est un régime de rotation du moteur à combustion interne (11).

4. Procédé de détermination d'anomalie pour un turbocompresseur du type à capacité variable (35) selon la revendication 1, dans lequel la condition de fonctionnement prédéterminée est une condition de ralenti du moteur à combustion interne (11), et la valeur indiquant un état de commande du moteur est une quantité de carburant injecté dans le moteur à combustion interne (11).

5. Procédé de détermination d'anomalie pour un turbocompresseur du type à capacité variable (35) selon l'une quelconque des revendications 1 à 4,
dans lequel, lorsque l'anomalie est déterminée au préalable, une instruction pour commander le mécanisme à capacité variable (74) à un degré maximum est émise, et
dans lequel, après que l'anomalie est à nouveau déterminée, il est finalement définit qu'il existe une anomalie dans le mécanisme à capacité variable (74).

6. Procédé de détermination d'anomalie pour un turbocompresseur du type à capacité variable (35) selon l'une quelconque des revendications 1 à 5, dans lequel une vanne d'arrêt d'évacuation (52) est prévue dans un système d'échappement (31, 33) du moteur à combustion interne (11) pour ouvrir et refermer un conduit (51) contournant une partie de turbine (37),
et la vanne d'arrêt d'évacuation (52) est ouverte, si l'anomalie du mécanisme à capacité variable (74) est définie.

7. Procédé de détermination d'anomalie pour un turbocompresseur du type à capacité variable (35) selon la revendication 6, dans la mesure où cette revendication se rapporte à la revendication 5,
dans lequel la vanne d'arrêt d'évacuation (52) est ouverte, si l'anomalie est finalement définie.

8. Système de détermination d'anomalie pour un turbocompresseur du type à capacité variable (35) qui fonctionne sur la base d'un flux de gaz d'échappement provenant d'un moteur à combustion interne (11) de façon à surcomprimer une chambre de combustion (18) du moteur à combustion interne (11) avec de l'air d'admission et qui comporte un mécanisme à capacité variable (74) destiné à commander de façon variable une quantité de gaz d'échappement introduit dans le turbocompresseur du type à capacité variable (35) de sorte que la valeur d'actionnement du turbocompresseur du type à capacité variable (35) est commandée,
**caractérisé en ce que**
si une différence entre une valeur réelle indiquant un état de commande du moteur détecté en tant que valeur caractéristique non spécifique au turbocompresseur et une valeur de référence indiquant un état de commande du moteur dans une condition de fonctionnement prédéterminée du moteur à combustion interne (11) est supérieure ou égale à une valeur prédéterminée, le système définit qu'il existe une anomalie dans le mécanisme à capacité variable (74).

9. Procédé de détermination d'anomalie pour un turbocompresseur du type à capacité variable (35) selon la revendication 1, dans lequel la valeur indiquant un état de commande du moteur est une valeur de commande de contre-réaction.
